# EUROPÄISCHE PATENTSCHRIFT

(11) **EP 1 820 049 B1**
(45) Veröffentlichungstag und Bekanntmachung des Hinweises auf die Patenterteilung: **18.06.2008**
(21) Anmeldenummer: 04822530.4
(22) Anmeldetag: 06.12.2004
(51) Int. Cl.: G01W 1/14

(54) **NIEDERSCHLAGSSENSOR, INSBESONDERE HAGELSENSOR**
PRECIPITATION SENSOR, IN PARTICULAR A HAIL SENSOR
CAPTEUR DE PRECIPITATION, NOTAMMENT CAPTEUR DE GRELE

(43) Veröffentlichungstag der Anmeldung: 22.08.2007
(73) Patentinhaber: Hochschule für Technik und Wirtschaft des Saarlandes, 66117 Saarbrücken (DE)
(72) Erfinder: LÖFFLER-MANG, Martin, 66119 Saarbrücken (DE)
(74) Vertreter: Bernhardt, Reinold
(86) Internationale Anmeldenummer: PCT/EP2004/013837
(87) Internationale Veröffentlichungsnummer: WO 2006/061031

(56) Entgegenhaltungen:
- DE-A1- 4 011 416
- DE-A1- 10 330 128
- DE-A1- 19 745 684
- US-A- 5 528 224

## Beschreibung

Die Erfindung betrifft einen Niederschlagssensor, insbesondere Hagelsensor, mit einer Prallplatte und einem Wandler zur Registrierung beim Aufschlagen von Niederschlagsteilchen auf die Prallplatte erzeugter Schwingungen, wobei der Wandler im Abstand von der Prallplatte angeordnet und über einen die Schwingungen auf den Wandler übertragenden festen Körper an die Prallplatte gekoppelt ist.

Aus der EP 0 422 553 B1 ist ein Niederschlagssensor bekannt, dessen Prallplatte einen Durchmesser von 1 bis 5 cm hat und mit Hilfe einer Klebeschicht auf einem piezoelektrischen Wandler befestigt ist. Durch Auswertung, insbesondere Frequenzanalyse, der vom Wandler gelieferten elektrischen Signale kann zwischen auftreffenden Regentropfen, Hagelkörnern und Schneeflocken unterschieden werden.

Ein Niederschlagssensor der eingangs erwähnten Art geht aus der DE 40 11 416 A1 hervor. Als Prallplatte dient eine an ihrem Rand eingefasste Membran, welche die Öffnung eines pfannenartigen Gehäuses überspannt. An ihrer Unterseite liegt gegen die Membran ein mechanisches Übertragungselement an, welches auf die Membran ausgeübten Druck auf einen piezoelektrischen Wandler überträgt, welcher auf der Bodenfläche des Gehäuses angeordnet ist.

US-A-5 528 224 beschreibt einen weiteren Niederschlagssensor mit Prallplatte. Die Prallplatte ist entlang ihres Randes mit dem Unterbau verbunden, welcher in seiner Mitte unter der Prallplatte ein Mikrophon zur Registrierung des Aufschlages von Niederschlagsteilchen auf die Prallplatte trägt. Das Mikrophon ist über eine akustisch isolierende Schaumstoffplatte mit dem Unterbau verbunden, so dass die Schwingungen der Prallplatte nur über die Luft unter der Prallplatte auf das Mikrophon übertragen werden.

Der vorliegenden Erfindung liegt die Aufgabe zugrunde, einen neuen Niederschlagssensor, insbesondere Hagelsensor, der eingangs erwähnten Art zu schaffen, welcher genauere quantitative Untersuchungen des Niederschlags als bekannte derartige Sensoren erlaubt.

Der diese Aufgabe lösende Niederschlagssensor nach der Erfindung ist dadurch gekennzeichnet, dass der die Schwingungen auf den Wandler übertragende feste Körper einen mit der Prallplatte an deren Rand verbundenen Unterbau der Prallplatte bildet.

Durch die erfindungsgemäße Übertragung in der Prallplatte durch Niederschlagsteilchen erzeugter Schwingungen zum Wandler ausschließlich über den Plattenrand lässt sich ein Wandlersignal erzeugen, dessen Größe vom Auftreffort der Niederschlagsteilchens auf der Prallplatte weitgehend unabhängig ist. Unter weiter unten genannten Bedingungen hängt die Größe des Wandlersignals dann nur von der Größe der Niederschlagsteilchen ab. Somit kann neben der Anzahl in einem Beobachtungszeitraum auf die Fläche der Prallplatte auftreffender Niederschlagsteilchen auch deren Größe bestimmt und z.B. die Größenverteilung von Hagelkörnern am Standort des Sensors ermittelt werden.

Vorzugsweise liegt die Prallplatte über ihrem gesamten Umfang mit einem Randbereich gegen den Unterbau an oder geht einstückig in den Unterbau über.

Während z.B. Kegel- oder Halbkugelformen als Unterbau denkbar sind, ist der Unterbau in der bevorzugten Ausführungsform der Erfindung in der Form eines zur Prallplatte offenen Kastens oder einer zur Prallplatte offenen Schale ausgebildet.

Zweckmäßig ist der Wandler, bei senkrechter Projektion auf die Prallplatte, in der Mitte der Prallplatte angeordnet. Bei dieser Anordnung ergibt sich die größtmögliche Unabhängigkeit der Höhe des Wandlersignals vom Auftreffort des Niederschlagteilchens auf der Prallplatte.

Der Wandler ist vorzugsweise plattenförmig. Insbesondere handelt es sich um einen piezo-elektrischen Wandler, der mit seiner ebenen Plattenfläche gegen eine ebene Fläche des Unterbaus anliegt und z.B. mit dem Unterbau verklebt ist. Vorzugsweise ist der Wandler an eine der Prallplatte zugewandte Oberfläche des Unterbaus gekoppelt, vorzugsweise an den Boden des Kastens bzw. der Schale.

In weiterer Ausgestaltung der Erfindung ist wenigstens ein zusätzlicher Wandler vorgesehen. Ein Niederschlagsteilchen erzeugt daher mehrere Wandlersignale, wobei sich durch Auswertung dieser, in einer bestimmten zeitlichen Folge auftretender Wandlersignale die Auflösung des Sensors steigern lässt.

Vorzugsweise ist der wenigstens eine zusätzliche Wandler an die Unterseite der Prallplatte in deren Mitte gekoppelt. Dessen Signal kann zur Zählung auftreffender Niederschlagsteilchen dienen, während das Signal des erstgenannten Wandlers ausgewertet wird, um die Größe der Niederschlagsteilchen zu ermitteln.

In weiterer vorteilhafter Ausgestaltung der Erfindung ist eine Halteeinrichtung vorgesehen, welche die Prallplatte geneigt zu Horizontalen hält. Aufprallende Hagelkörner werden daher zur Seite abgelenkt. Schmelzwasser oder Regenwasser läuft ständig ab. Die Oberfläche der Prallplatte ist möglichst glatt, so dass Eisteilchen von ihr abrutschen können. So kann es nur in geringem Maße zu Verfälschungen der auszuwertenden Signale durch Eis oder Wasser auf der Prallplatte kommen.

In weiterer vorteilhafter Ausgestaltung der Erfindung kann eine Auswerteinrichtung vorgesehen sein, welche neben einer Teilchenzählung und Signalauswertung zwecks Ermittlung der Teilchengröße eine Frequenzanalyse der Wandlersignale vornimmt. Eine solche Frequenzanalyse kann z.B. darüber Aufschluss geben, dass es sich bei registrierten Hagelkörnern nicht um homogene Eisteilchen handelt. In solchen Fällen kann die Bestimmung der Teilchengröße unterbleiben bzw. ein ermittelter Wert der Teilchengröße verworfen werden.

In weiterer Ausgestaltung der Erfindung weist die Auswerteinrichtung einen Filter auf. Vorzugsweise unterdrückt der Filter niedrige Frequenzen, um Signalverfälschungen durch Nachschwingen auszuschalten.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: ein erstes Ausführungsbeispiel für einen Hagelsensor nach der Erfindung in einer perspektivischen Explosionsdarstellung,
- Fig. 2: ein zweites Ausführungsbeispiel für einen Hagelsensor nach der Erfindung,
- Fig. 3: den Hagelsensor von Fig. 2 mit einer Halteeinrichtung, und
- Fig. 4: von einem Hagelsensor gemäß Fig. 1 bis 3 erzeugte Wandlersignale.

Ein im wesentlichen aus wetter- und UV-beständigem Kunststoff, wie z.B. Polytetrafluorethylen oder Polysterol, gefertigter Hagelsensor weist eine rechteckige Prallplatte 1 und einen mit der Prallplatte 1 verbindbaren Unterbau 2 in Form eines zu der Prallplatte offenen, flachen Kastens auf.

In dem betreffenden Ausführungsbeispiel liegen die Seitenlängen der rechteckigen Prallplatte 1 bei etwa 50cm. Die Seitenlängen könnten auch größer oder kleiner sein. Die Plattendicke beträgt 10 mm. Der kastenförmige Unterbau 2 weist eine Bodenwand 3 und Seitenwände 4 gleicher Dicke auf.

Umlaufend um den Rand der Prallplatte 1 sind Bohrungen 5 gebildet, deren Anordnung deckungsgleich zu Gewindebohrungen 6 in den Seitenwänden 4 des Unterbaus 2 ist. Unter Verwendung der zahlreichen Bohrungen 5 und 6 lässt sich die Prallplatte 1 mit dem Unterbau 2 verschrauben, wobei die Prallplatte 1 über ihren gesamten Umfang mit einem Randbereich gegen die jeweiligen Randflächen der Seitenwände 4 derart fest anliegt, dass durch die Anlagefläche hindurch eine Ausbreitung von Wellen im Bereich der Schallfrequenzen erfolgen kann.

An die plattenförmige Bodenwand 3 und die Prallplatte 1 ist jeweils in Plattenmitte ein plattenförmiger Piezo-Wandler 7 bzw. 8 angekoppelt, wobei der Wandler 7 auf der Plattenoberseite und der Wandler 8 auf der Plattenunterseite angeordnet ist . und jeweils mit einer ebenen Fläche gegen die betreffende Plattenoberfläche anliegt. Der Wandler kann mit der Plattenoberfläche verklebt sein.

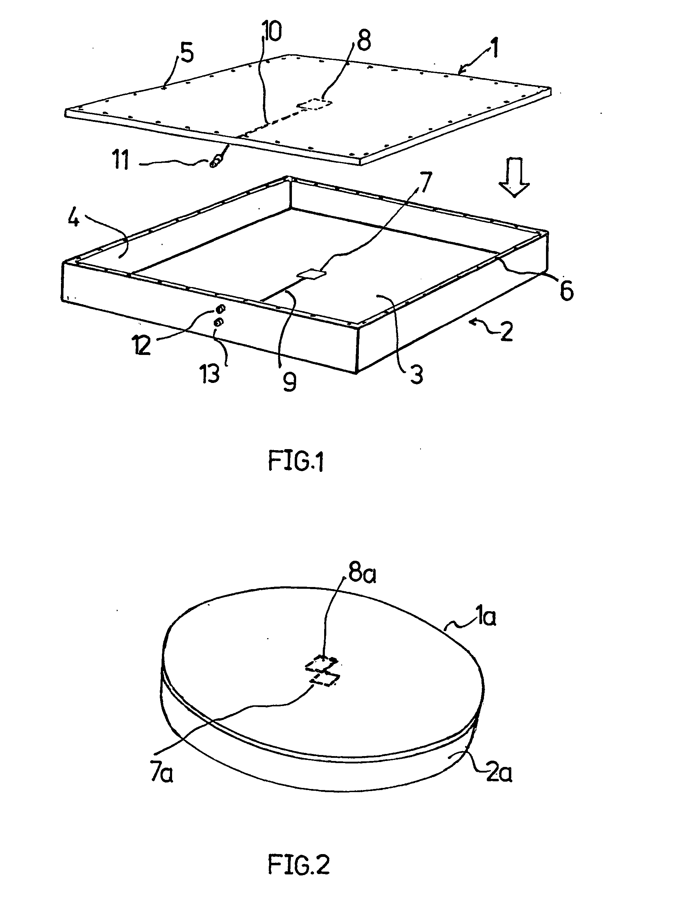

Anschlussleitungen 9 bzw. 10 der Piezo-Wandler 7 und 8 führen zu einer BNC-Buchse 12 bzw. 13 in einer der Seitenwände 4 des Unterbaus 2, wobei die Anschlussleitungen 9,10 innenseitig mit den Buchsen 12,13 über BNC-Stecker 11 verbindbar sind. An die als Doppelbuchsen ausgebildeten Buchsen 12 und 13 ist eine in Fig. 1 nicht gezeigte Auswerteinrichtung anschließbar, welche von den Wandlern 7,8 erzeugte elektrische Signale empfängt. Anschlussbuchsen könnten statt in der Seitenwand auch in der Bodenwand vorgesehen sein.

Abweichend von dem in Fig. 1 gezeigten Ausführungsbeispiel für einen Hagelsensor könnte die Bodenplatte 3 des Unterbaus 2 nach oben gekehrt sein, wobei die Bodenplatte dann als Prallplatte dient, während die Seitenwände 4 zusammen mit der Platte 1 den Unterbau bilden.

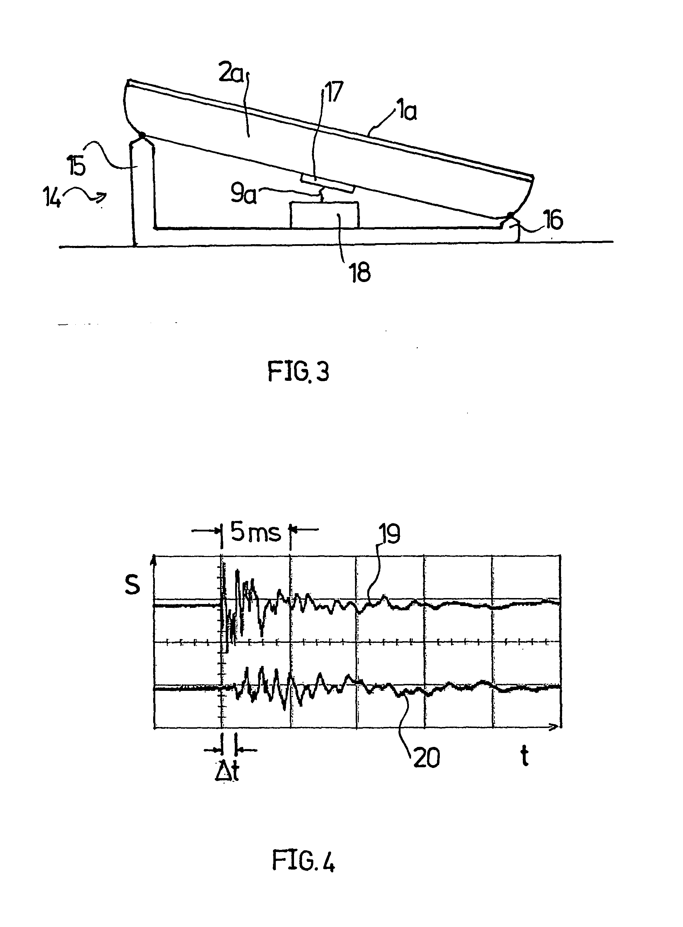

Fig.2 und 3 zeigen ein weiteres Ausführungsbeispiel für einen Hagelsensor. Eine kreisförmige Prallplatte 1 a ist am Rand über ihren gesamten Umfang mit dem Öffnungsrand eines flachen, schalenförmigen Unterbaus verbunden, z.B. verklebt oder verschweißt. An den Schalenboden ist außen, in senkrechter Projektion auf die Prallplatte 1 a in deren Mitte, ein Piezo-Wandler 7a angekoppelt.

Fig. 3 zeigt den Hagelsensor von Fig. 2 verbunden mit einer Halterung 14, welche unterschiedlich hohe Halteschenkel 15 und 16 aufweist, so dass die Prallplatte 1a zur Horizontalen geneigt ist. Eine ähnliche Halterung ließe sich für den Hagelsensor von Fig. 1 verwenden.

Das Bezugszeichen 17 in Fig. 3 weist auf ein Schutzgehäuse für den Piezo-Wandler 7a hin. Anschlussleitungen 9a des Piezo-Wandlers stehen in Verbindung mit einer Auswerteinrichtung 18, welche Einrichtungen zur Datenfernübertragung aufweisen kann.

Beim Auftreffen von Hagelkörnern auf die Prallplatte 1 bzw. 1 a entstehen knallartige Geräusche. Diesen kurzandauernden Geräuschen entsprechend breitet sich jeweils vom Auftreffort des Hagelkorns auf der Prallplatte im Material der Prallplatte ein Wellenberg bzw. Wellenpaket aus. Bei genügend fester Ankopplung der Prallplatte an den Unterbau setzt sich diese Ausbreitung in das feste Material des Unterbaus hinein fort. Entsprechend den unterschiedlichen Laufwegen des Wellenpakets im festen Material reagiert der Wandler 7 gegenüber dem Wandler 8 zeitverzögert.

In Fig. 4 betrifft eine mit 19 bezeichnete Kurve ein Wandlersignal S(t) des Wandlers 8, eine Kurve 20 ein um Δt zeitverzögert einsetzendes, durch das gleiche Wellenpaket erzeugtes Wandlersignal S(t) des Wandlers 7.

Während beim Wandler 8 die Höhe des Signals S(t) zu einem Zeitpunkt t oder dessen Maximalhöhe sowohl von der Größe des Hagelkorns als auch der Entfernung seines Auftreffortes vom Wandler abhängt und somit kein eindeutiger Zusammenhang zwischen Korngröße und Signalhöhe besteht, ist das Signal des Wandlers 7 vom Auftreffort des Hagelkorns weitgehend unabhängig, so dass anhand der Signalhöhe oder eines Integrals über das Signal oder über dessen Hüllkurve auf die Größe des Hagelkorns geschlossen werden kann.

Letzteres gilt unter der Voraussetzung, dass es sich bei den Hagelkörnern um kugelförmige, homogene Eisstücke gleicher Dichte handelt, die ihre maximale Fallgeschwindigkeit, bei der Gewicht und Luftwiderstand einander aufheben, erreicht haben. Diese Voraussetzung ist in vielen Fällen wenigstens näherungsweise erfüllt. Auch bedarf es einer möglichst eis- und wasserfreien Prallfläche, die daher zweckmäßig zur Horizontalen geneigt ist, so dass Eisstücke zur Seite abprallen bzw, abrutschen und Schmelzwasser abfließt.

Zur Auswertung der Wandlersignale kann eine computergestützte Messwerterfassungseinrichtung verwendet werden, welche die ankommenden Signale zählt, digitalisiert, ggf. filtert und eine Frequenzanalyse durchführt und Korngrößen ermittelt, z.B. aus gespeicherten Zusammenhängen zwischen Korngrößen und Wandlersignalen.

Eine solche Auswertung lässt sich in der Auswerteinheit 18 unter Verdichtung der Messdaten durchführen, wobei verdichtete Daten dann zu einer Zentrale übertragen zu werden, die mit einer Vielzahl von Niederschlagssensoren in Verbindung steht.

## Patentansprüche

1. Niederschlagssensor, insbesondere Hagelsensor, mit einer Prallplatte (1) und einem Wandler (7) zur Registrierung beim Aufschlagen von Niederschlagsteilchen auf die Prallplatte erzeugter Schwingungen, wobei der Wandler (7) im Abstand von der Prallplatte (1) angeordnet und über einen die Schwingungen auf den Wandler (7) übertragenden festen Körper an die Prallplatte (1) gekoppelt ist,
**dadurch gekennzeichnet,**
**dass** der die Schwingungen auf den Wandler (7) übertragende feste Körper einen mit der Prallplatte (1) an deren Rand verbundenen Unterbau (2) der Prallplatte (1) bildet.

2. Niederschlagssensor nach Anspruch 1,
**dadurch gekennzeichnet,**
**dass** die Prallplatte (1) ausschließlich an ihrem Rand mit dem Unterbau (2) verbunden ist.

3. Niederschlagssensor nach Anspruch 2,
**dadurch gekennzeichnet,**
**dass** die Prallplatte (1) über ihren gesamten Umfang mit einem Randbereich gegen den Unterbau (2) anliegt oder einstückig in den Unterbau (2) übergeht.

4. Niederschlagssensor nach einem der Ansprüche 1 bis 3,
**dadurch gekennzeichnet,**
**dass** der Unterbau (2,2a) in der Form eines zur Prallplatte (1) offenen Kastens oder einer zur Prallplatte (1a) offenen Schale ausgebildet ist.

5. Niederschlagssensor nach einem der Ansprüche 1 bis 4,
**dadurch gekennzeichnet,**
**dass** der Wandler (7) über eine, vorzugsweise ebene, Anlagefläche an den Unterbau (2) gekoppelt ist.

6. Niederschlagssensor nach einem der Ansprüche 1 bis 5,
**dadurch gekennzeichnet,**
**dass** der Wandler (7) in senkrechter Projektion auf die Prallplatte (1) in der Mitte der Prallplatte (1) angeordnet ist.

7. Niederschlagssensor nach einem der Ansprüche 1 bis 6,
**dadurch gekennzeichnet,**
**dass** der Wandler (7) an eine der Prallplatte (1) gegenüberliegende Oberfläche des Unterbaus (2) gekoppelt ist.

8. Niederschlagssensor nach einem der Ansprüche 1 bis 7,
**dadurch gekennzeichnet,**
**dass** wenigstens ein weiterer Wandler (8) vorgesehen ist.

9. Niederschlagssensor nach Anspruch 8,
**dadurch gekennzeichnet,**
**dass** der wenigstens eine weitere Wandler (8) an die Unterseite der Prallplatte (1) gekoppelt ist.

10. Niederschlagssensor nach einem der Ansprüche 1 bis 9,
**dadurch gekennzeichnet,**
**dass** eine Halteeinrichtung (14) zur Halterung der Prallplatte (1 a) in einer zur Horizontalen geneigten Lage vorgesehen ist.

11. Niederschlagssensor nach einem der Ansprüche 1 bis 10,
**dadurch gekennzeichnet,**
**dass** eine sowohl Anzahl als auch Höhe elektrischer Wandlersignale auswertende Einrichtung (18) vorgesehen ist.

12. Niederschlagssensor nach Anspruch 11,
**dadurch gekennzeichnet,**
**dass** die Auswerteinrichtung (18) einen Frequenzanalysator und/oder einen Filter umfasst.

## Claims

1. Precipitation sensor, in particular hail sensor, comprising a baffle plate (1) and a transducer (7) for registering vibrations which are generated when particles of precipitation strike the baffle plate, with the transducer (7) being arranged at a distance from the baffle plate (1) and being coupled to the baffle plate (1) by means of a solid body which transmits the vibrations to the transducer (7), **characterized in that** the solid body which transmits the vibrations to the transducer (7) forms a substructure (2) of the baffle plate (1), which substructure is connected to the edge of the baffle plate (1).

2. Precipitation sensor according to Claim 1,
**characterized in that** the baffle plate (1) is connected to the substructure (2) solely at its edge.

3. Precipitation sensor according to Claim 2,
**characterized in that** the baffle plate (1) rests against the substructure (2) over its entire periphery by way of an edge region or integrally merges with the substructure (2).

4. Precipitation sensor according to one of Claims 1 to 3, **characterized in that** the substructure (2, 2a) is in the form of a box which is open towards the baffle plate (1) or a bowl which is open towards the baffle plate (1a).

5. Precipitation sensor according to one of Claims 1 to 4, **characterized in that** the transducer (7) is coupled to the substructure (2) by means of a, preferably flat, abutment face.

6. Precipitation sensor according to one of Claims 1 to 5, **characterized in that** the transducer (7) is arranged in a perpendicular projection to the baffle plate (1) in the centre of the baffle plate (1).

7. Precipitation sensor according to one of Claims 1 to 6, **characterized in that** the transducer (7) is coupled to a surface of the substructure (2), which surface is opposite the baffle plate (2).

8. Precipitation sensor according to one of Claims 1 to 7, **characterized in that** at least one further transducer (8) is provided.

9. Precipitation sensor according to Claim 8,
**characterized in that** the at least one further transducer (8) is coupled to the lower face of the baffle plate (1).

10. Precipitation sensor according to one of Claims 1 to 9, **characterized in that** a retaining device (14) for retaining the baffle plate (1a) in a position which is inclined in relation to the horizontal is provided.

11. Precipitation sensor according to one of Claims 1 to 10, **characterized in that** a device (18) which evaluates both the number and the magnitude of the electrical transducer signals is provided.

12. Precipitation sensor according to Claim 11,
**characterized in that** the evaluation device (18) comprises a frequency analyser and/or a filter.

## Revendications

1. Capteur de précipitation, en particulier capteur de grêle, comprenant une plaque à impacts (1) et un convertisseur (7) pour enregistrer les oscillations engendrées lors d'un impact de particules de précipitation sur la plaque à impacts, ledit convertisseur (7) étant agencé à distance de la plaque à impacts (1) et couplé à la plaque à impacts (1) via un corps solide qui transmet les oscillations au convertisseur (7),
**caractérisé en ce que**
le corps solide qui transmet les oscillations au convertisseur (7) forme une sous-structure (2) de la plaque à impacts (1), reliée à la plaque à impacts (1) à sa bordure.

2. Capteur de précipitation selon la revendication 1,
**caractérisé en ce que** la plaque à impacts (1) est reliée à la sous-structure (2) exclusivement au niveau de sa bordure.

3. Capteur de précipitation selon la revendication 2,
**caractérisé en ce que** la plaque à impacts est appliquée sur la totalité de sa périphérie par une zone de bordure contre la sous-structure (2), ou se transforme d'une seule pièce dans la sous-structure (2).

4. Capteur de précipitation selon l'une des revendications 1 à 3,
**caractérisé en ce que** la sous-structure (2, 2a) est réalisée sous la forme d'une boîte ouverte vers la plaque à impacts (1) ou d'une coque ouverte vers la plaque à impacts (1a).

5. Capteur de précipitation selon l'une des revendications 1 à 4,
**caractérisé en ce que** le convertisseur (7) est couplé à la sous-structure (2) via une surface d'application, de préférence plane.

6. Capteur de précipitation selon l'une des revendications 1 à 5,
**caractérisé en ce que** le convertisseur (7) est agencé au milieu de la plaque à impacts (1), en projection perpendiculaire sur la plaque à impacts (1).

7. Capteur de précipitation selon l'une des revendications 1 à 6,
**caractérisé en ce que** le convertisseur (7) est couplé à une surface de la sous-structure (2) opposée à la plaque à impacts (1).

8. Capteur de précipitation selon l'une des revendications 1 à 7,
**caractérisé en ce qu'**il est prévu au moins un autre convertisseur (8).

9. Capteur de précipitation selon la revendication 8,
**caractérisé en ce que** ledit au moins un autre convertisseur (8) est couplé à la face inférieure de la plaque à impacts (1).

10. Capteur de précipitation selon l'une des revendications 1 à 9,
**caractérisé en ce qu'**il est prévu des moyens de maintien (14) pour maintenir la plaque à impacts (1a) dans une position inclinée par rapport à l'horizontale.

11. Capteur de précipitation selon l'une des revendications 1 à 10,
**caractérisé en ce qu'**il est prévu une unité (18) qui évalue aussi bien le nombre que la hauteur des signaux de conversion électrique.

12. Capteur de précipitation selon la revendication 11,
**caractérisé en ce que** l'unité d'évaluation (18) comprend un analyseur de fréquence et/ou un filtre.
